# EUROPÄISCHE PATENTSCHRIFT

(11) **EP 2 632 694 B1**
(45) Veröffentlichungstag und Bekanntmachung des Hinweises auf die Patenterteilung: **02.07.2014**
(21) Anmeldenummer: 11757630.6
(22) Anmeldetag: 16.09.2011
(51) Int. Cl.: B29C 65/08, B29C 65/74, B26F 1/20, B65B 51/22, B65B 51/30, B65B 61/06

(54) **VORRICHTUNG ZUM TRENNEN EINES PACKSTOFFS FÜR EINE VERPACKUNG**
APPARATUS FOR CUTTING A PACKAGING MATERIAL FOR A PACKAGE
DISPOSITIF DE SÉPARATION D'UN MATÉRIAU POUR UN EMBALLAGE

(30) Priorität: 29.10.2010 DE 102010043090
(43) Veröffentlichungstag der Anmeldung: 04.09.2013
(73) Patentinhaber: Robert Bosch GmbH, 70442 Stuttgart (DE)
(72) Erfinder: IPPERS, Juergen, 47929 Grefrath (DE); WIEDUWILT, Ulrich, 73529 Schwaebisch Gmuend (DE)
(86) Internationale Anmeldenummer: PCT/EP2011/066121
(87) Internationale Veröffentlichungsnummer: WO 2012/055633

(56) Entgegenhaltungen:
- EP-A1- 2 361 834
- WO-A1-85/04849
- WO-A1-2005/102844
- WO-A1-2007/012917
- WO-A1-2008/102250
- DE-A1-102009 000 240
- DE-A1-102009 002 093
- DE-A1-102009 026 952
- DE-A1-102009 045 299

## Beschreibung

### Stand der Technik

Die vorliegende Erfindung betrifft eine Vorrichtung zum Trennen eines Packstoffs für eine Verpackung, welche insbesondere in Schlauchbeutelmaschinen verwendet wird.

Im Stand der Technik sind Schlauchbeutelmaschinen bekannt, welche Süßigkeiten und andere Artikel verpacken. Hierbei wird üblicherweise aus einer Folie über eine Formschulter ein länglich geschlossener Schlauch hergestellt, dessen eines offene Ende mittels einer Ultraschall-Schweißvorrichtung, die eine Sonotrode und einen Amboss umfasst, durch eine Quersiegelnaht versiegelt wird Der Packstoff wird zwischen der Sonotrode und dem Amboss dabei durch Berühren der beiden Teile verschweißt. Nach dem Befüllen wird der Schlauch über dem Füllbereich dann durch eine weitere Quersiegelnaht zu einem Schlauchbeutel verschlossen. Darüber hinaus sind üblicherweise Schneidvorrichtungen mit einem Messer vorgesehen, um die noch zusammenhängenden Beutel zu trennen. Aufgrund von Berührungen des Messers mit der Sonotrode ergeben sich Abnutzungserscheinungen, so dass die Messer nach einer gewissen Nutzungszeit ausgetauscht werden müssen. Ferner ist z. B. aus der WO 2008/102250 bekannt, dass spezielle Hartmetalleinsätze in den Ultraschallwerkzeugen verwendet werden, um den Verschleiß infolge der Berührung zu reduzieren.

Aus der DE 10 2009 002 093 A1 ist bereits eine Vorrichtung zum Schweißen und Trennen eines Packstoffs bekannt. Sie umfasst eine Ultraschallschweißvorrichtung mit einer Sonotrode mit wenigstens einem Sonotrodensegment und einem Amboss mit wenigstens einem Ambosssegment und eine kombinierte Schneid- und Spanneinrichtung. Die Schneid- und Spanneinrichtung ist in die Ultraschallschweißvorrichtung integriert, wobei die Schneid- und Spanneinrichtung dem zugeführten Packstoff zuerst spannt und dann im gespannten Zustand mittels einer Schneide schneidet.

### Offenbarung der Erfindung

Die erfindungsgemäße Vorrichtung mit den Merkmalen des Anspruchs 1 weist demgegenüber den Vorteil auf, dass sie ein Trennen eines Packstoffs für eine Verpackung mit reduzierter Schneidkraft und Schneidlänge bei integrierter Aufreißhilfe ermöglicht. Das Messer besitzt eine Schneide mit einer Schneidkante, die zumindest zwei Spitzen und zumindest zwei geschwungene Abschnitte umfasst, die die beiden Spitzen miteinander verbinden Die beschriebene Geometrie zeichnet sich gegenüber einer konventionellen Schneidlinie durch eine Reduzierung der Schneidlänge aus. In der Folge wird auch die notwendige Schneidkraft reduziert. Damit ist die Schneidkraft geringer als die Siegelkraft. Die Kontur der Schneidkante zeichnet sich insbesondere durch die geschwungenen Abschnitte aus. Über diese geschwungenen Abschnitte gehen vordere Spitze bzw. obere Spitze jeweils in die geraden Abschnitte über Vordere Spitze und obere Spitze werden durch den klammerformigen Abschnitt verbunden Damit kann die Schneidlänge reduziert werden

Andererseits wird gezielt die Kerbwirkung der Schneidkante mittels der Geometrie der Spitzen beeinflusst. Die Spitzen dienen nämlich als Aufreißhilfe, indem diese den Packstoff perforieren. Die Aufreißhilfe lässt sich prinzipiell über eine Vernngerung des spitzen Winkels verlängern. Damit wird die Kerbwirkung erhöht, ohne hierbei die Schneidkraft signifikant zu erhöhen. Besonders bevorzugt läuft die Spitze mit einem spitzen Winkel in einem Bereich zwischen 10° und 60°, vorzugsweise ca. 30° aus, so dass gute Kerbwirkungen erzielt werden.

In einer zweckmäßigen Weiterbildung ist vorgesehen, dass der gerade Abschnitt gebildet wird, indem zumindest zwei Flächen vorzugsweise unter einem Winkel von ca. 90° aufeinandertreffen. Dadurch lasst sich die Schneide aufgrund der damit erzielbaren rechteckförmigen Grundform besonders leicht fertigen

In einer zweckmäßigen Weiterbildung ist vorgesehen, dass zumindest zwei Flächen vorzugsweise in derselben Ebene angeordnet sind und über eine Erhöhung oder Vertiefung miteinander verbunden sind. Diese Erhöhungen oder Vertiefungen bilden in besonders einfacher Weise an ihren Enden Spitzen aus, die als Aufreißhilfe dienen.

In einer zweckmäßigen Weiterbildung ist vorgesehen, dass das mindestens eine Messer derart am Amboss angeordnet ist, dass ein Mindestabstand zwischen der Sonotrode und einer Schneide des Messers eingehalten wird, sodass der Packstoff ohne eine Berührung zwischen der Sonotrode und dem Messer durchtrennt wird. Daher kann auf zusätzliche Bauteile, wie z. B. die Hartmetalleinsätze bei Vorrichtungen des Standes der Technik, zum Schutz vor einem Verschleiß aufgrund der Berührung der Ultraschallwerkzeuge verzichtet werden. Ferner weist die erfindungsgemäße Vorrichtung eine hohe Standzeit auf.

Gemäß einer bevorzugten Ausgestaltung der Erfindung umfasst die Vorrichtung zudem eine Verstelleinrichtung, welche die Position des Messers im Amboss in Radialrichtung des Ambosses einstellt. Dadurch kann die Messerposition auf einfache Weise auf die Schwingungsamplitude der Sonotrode entsprechend dem zu trennenden Packstoff angepasst werden. Somit werden Umrüstzeiten der Vorrichtung wesentlich reduziert, was zu einer erhöhten Kosteneffizienz der Produktion beiträgt.

Vorzugsweise steht das Messer nur geringfügig, insbesondere um 5 µm bis 50 µm, vorzugsweise 10 µm bis 20 µm, aus einer der Sonotrode zugewandten Oberfläche des Ambosses vor. Dadurch kann das Messer den Packstoff um dieses Maß an die Sonotrode heranführen, deren hochfrequente Schwingung den Packstoff an der Schneide des Messers ohne eine Anpresskraft zwischen Sonotrode und Amboss durchtrennt.

Gemäß einer weiteren bevorzugten Ausgestaltung der Erfindung ist eine zum Amboss gerichtete Oberfläche der Sonotrode flächenartig und ohne Ausnehmungen gebildet. Diese einfache Formgebung trägt wesentlich zu einer verbesserten Siegelnahtqualität und zu günstigeren Herstellkosten der Sonotrodenelemente bei.

Gemäß einer weiteren bevorzugten Ausgestaltung der Erfindung ist die Sonotrode mit einem flachen Winkel dachförmig ausgebildet. Dadurch können die Rotationsbewegungen der Vorrichtung beim Schweißen und Trennen des Packstoffs auf ein kleines Winkelmaß reduziert und der gesamte Produktionsablauf beschleunigt werden.

Vorzugsweise ist das Messer in der Schneidvorrichtung fest gelagert. Dadurch kann ein elastisches Element zwischen dem Messer und dem Amboss zur Schwingungsentkopplung zwischen Sonotrode und Amboss entfallen, was zur weiteren Vereinfachung und Kostenreduzierung der Vorrichtung beiträgt. Zudem werden dadurch der Austausch und die Justierung des Messers vereinfacht.

Weiterhin bevorzugt ist die Schneidvorrichtung zwischen einem ersten Siegelbereich und einem zweiten Siegelbereich des Ambosses angeordnet. Hierdurch wird ein besonders kompakter Aufbau der Vorrichtung erreicht.

Weiterhin bevorzugt ist eine Schneidkraft der Schneidvorrichtung kleiner als eine Siegelkraft der Ultraschall-Schweißvorrichtung. Dies trägt zu einer verbesserten Siegelqualität der Kopf- und Fußnähte der Packungen bei. Ferner ist das Messer vorzugsweise einstellbar, sodass die Größe des Mindestabstands an die Schwingungsamplitude der Sonotrode und entsprechend der Materialstärke und Materialbeschaffenheit des Packsstoffs angepasst und justiert werden kann.

Weitere zweckmäßige Weiterbildungen ergeben sich aus weiteren abhängigen Ansprüchen und aus der Beschreibung.

### Kurze Beschreibung der Zeichnung

Nachfolgend wird ein Ausführungsbeispiel der Erfindung unter Bezugnahme auf die begleitende Zeichnung im Detail beschneben. In der Zeichnung ist:
- Figur 1: eine schematische Schnittdarstellung der erfindungsgemäßen Vorrichtung in einer ersten Stellung,
- Figur 2: eine schematische Schnittdarstellung der Vorrichtung von Figur 1 in einer zweiten Stellung,
- Figur 3: eine schematische Schnittdarstellung der Vorrichtung von Figur 1 in einer dritten Stellung,
- Figur 4: eine vergrößerte schematische Schnittdarstellung der Siegelwerkzeuge der Vorrichtung von Figur 1,
- Figur 5: eine Draufsicht auf die Oberfläche des Amboss,
- Figur 6: eine Seitenansicht des Amboss von Figur 5,
- Figur 7: ein vergrößerter Ausschnitt des Messers in der Draufsicht nach Figur 6 und
- Figur 8: eine perspektivische Darstellung eines Ausschnitts des Messers.

### Ausführungsform der Erfindung

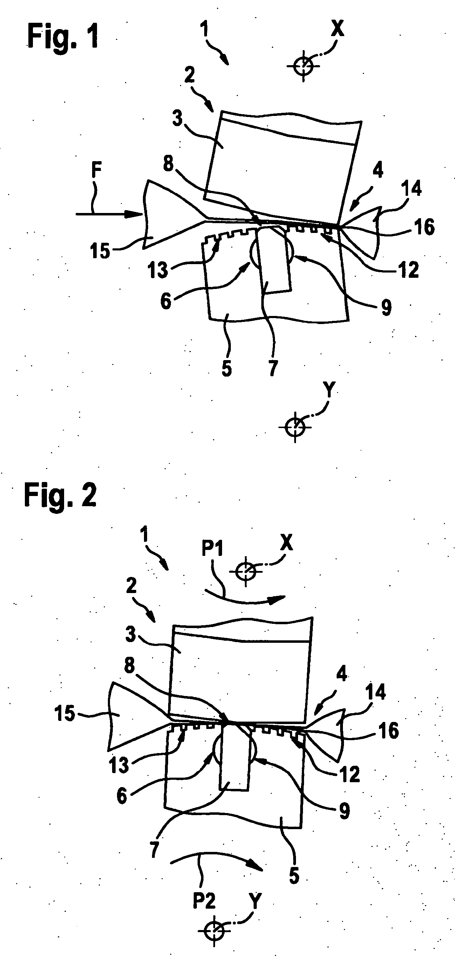

Wie Figur 1 ersichtlich ist, umfasst die Vorrichtung 1 zum Schweißen und Trennen eines Packstoffs 4 eine Ultraschall-Schweißvorrichtung 2 mit einer Sonotrode 3 und einem Amboss 5, zwischen denen der Packstoff 4, der eine vorhergehende Packung 14 und eine nachfolgende Packung 15 bildet, in einer mit einem Pfeil gekennzeichneten Förderrichtung F hindurchgeführt wird. Die Sonotrode 3 ist um eine erste Rotationsachse X drehbar und der Amboss 5 um eine zweite Rotationsachse Y drehbar.

Im Innem des Ambosses 5 ist eine Schneidvorrichtung 6 mit einem Messer 7 und einer Verstelleinrichtung 9 angeordnet, mittels der das Messer 7 fixiert sowie in Radialrichtung des Ambosses 5 eingestellt wird. Die Schneidvorrichtung 6 ist zwischen einem ersten Siegelbereich 12 und einem zweiten Siegelbereich 13 des Ambosses 5 angeordnet.

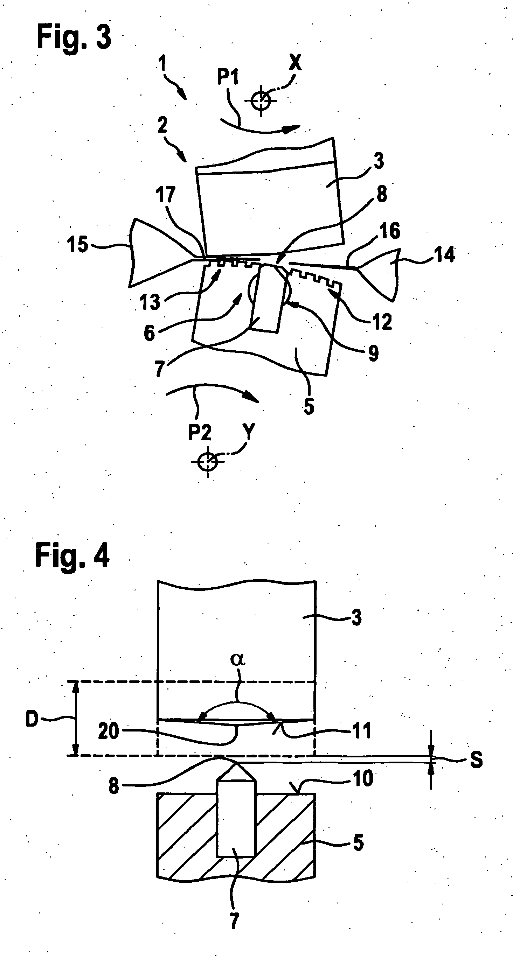

Wie aus der vergrößerten schematischen Schnittdarstellung von Figur 4 ersichtlich, steht das Messer 7 aus einer der Sonotrode 3 zugewandten Oberfläche 10 des Ambosses 5 vor. Dabei wird ein Mindestabstand S zwischen einer Schneide 8 des Messers 7 und einem Dachpunkt 20 der Sonotrode 3 bei einem mit einer gestrichelten Linie symbolisiert dargestellten Maximalausschlag der mit einer Amplitude D schwingenden Sonotrode 3 eingehalten Dieser Mindestabstand S liegt vorzugsweise in einem Bereich von 5 µm bis 50 µm. Wie aus Figur 4 ferner ersichtlich, ist eine zum Amboss 5 gerichtete Oberfläche 11 der Sonotrode ohne Ausnehmungen und mit einem Winkel α dachförmig mit geringer Neigung ausgebildet. Dieser Winkel liegt vorzugsweise in einem Bereich von 165° bis 175° und ist in Figur 4 beispielhaft mit α = 172° dargestellt.

Das Schweißen und Trennen des Packstoffs 4 einer Verpackung erfolgt in drei Schritten bzw. Stellungen, die in den Figuren 1 bis 3 dargestellt sind. Bei der in Figur 1 dargestellten ersten Stellung der Ultraschall- Schweißvorrichtung 2 wird zuerst eine Fußnaht 16 der vorhergehenden Packung 14 am ersten Siegelbereich 12 gesiegelt, die zwischen der Sonotrode 3 und dem Amboss 5 fixiert ist.

Bei der in Figur 2 dargestellten zweiten Stellung der Ultraschall-Schweißvorrichtung 2 wird der Packstoff 4 zwischen der vorhergehenden Packung 14 und der nachfolgenden Packung 15 durchtrennt. Hierzu führt die Sonotrode 3 eine Drehung um ihre Rotationsachse X in Richtung eines Pfeils P1 und der Amboss 5 eine Drehung um seine Rotationsachse Y in Richtung eines Pfeils P2 gemäß dem in Figur 4 dargestellten Beispiel von jeweils 8° aus. Dadurch liegen der Dachpunkt 20 (siehe Figur 4) der Oberfläche 11 der Sonotrode 3 und die Schneide 8 in radialer Richtung gegenüber. Der in Figur 4 zur besseren Übersichtlichkeit nicht dargestellte Packstoff wird durch die Drehung des Ambosses 5 vom Messer 7 in Richtung zur Sonotrode 3 angehoben bzw. geführt und liegt auf der Schneide 8 auf. Infolge der Schwingungen der Sonotrode 3 wird der Packstoff 4 zwischen dem Dachpunkt 20 und der Schneide 8 des Messers durchtrennt, wobei der Mindestabstand S kleiner oder maximal gleichgroß wie eine Materialstärke des Packstoffs eingestellt ist, sodass kein mechanischer Kontakt zwischen der Sonotrode 3 und dem Messer 7 erfolgt.

Bei der in Figur 3 dargestellten dritten Stellung der Ultraschall-Schweißvorrichtung 2 wird eine Kopfnaht 17 einer nachfolgenden Packung 15 am zweiten Siegelbereich 13 gesiegelt. Hierzu führen die Sonotrode 3 und der Amboss 5 jeweils weitere eine Drehung von 8° um ihre Rotationsachse X bzw. Y in Richtung des Pfeils P1 bzw. P2 aus und siegeln zwischen der Sonotrode 3 und dem Amboss 5 die Kopfnaht 17 der nachfolgenden Packung 15

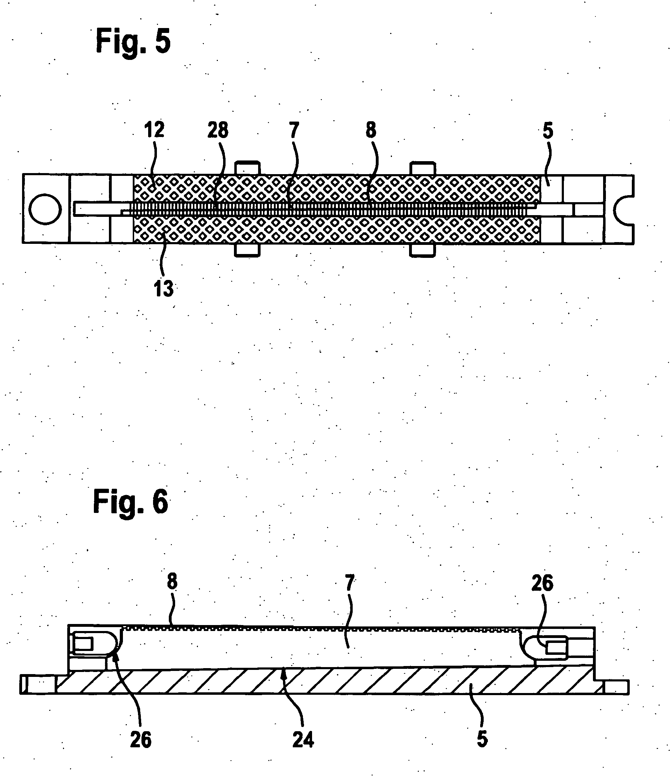

Gemäß Figur 5 liegt zwischen erstem Siegelbereich 12 und zweitem Siegelbereich 13 die Schneide 8 des Messers 7. Die Schneide 8 ist so angeordnet, dass eine Schneidkante 28 am weitesten übersteht. Figur 5 ist ersichtlich, dass die Schneidkante 28 im Wesentlichen diagonal von der linken oberen Seite der zweiten Siegelfläche 13 bis zur rechten unteren Ecke der ersten Siegelfläche 12 verläuft. Dadurch verlängert sich die Schneidzeit und reduziert die Schneidkraft.

In der zugehörigen Schnittdarstellung nach Figur 6 ist ersichtlich, dass das Messer eine keilförmige Schräge 24 aufweist, die mit einer entsprechenden Fläche des Amboss 5 zusammenwirkt. Wie weit die Schneide 8 übersteht, lässt sich mittels der links und rechts angeordneten Einstellmittel 26 durch eine Verschiebung entlang der Schräge 24 einstellen.

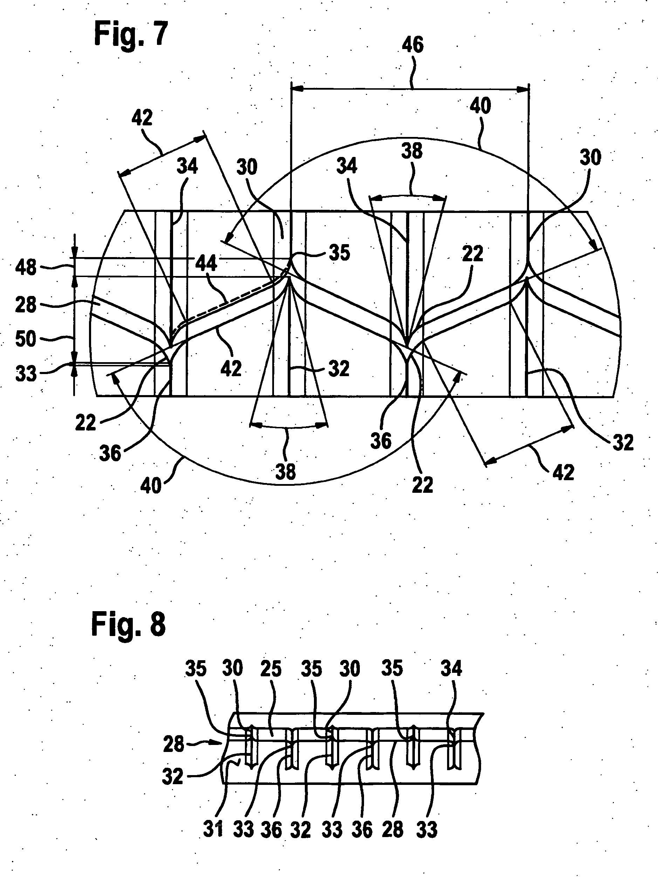

Die in den Figuren 7 und 8 gezeigte Schneidkante 28 wird wie folgt gebildet. Das Messer 7 weist eine im Wesentlichen rechteckförmige Struktur auf mit vorderen Flächen 31 und oberen Flächen 29, die jeweils in einer Ebene liegen. Die vorderen Flächen 31 sind abwechselnd von vorderen Vertiefungen 32 und vorderen Erhöhungen 36 getrennt. Die vorderen Vertiefungen 32 und vorderen Erhöhungen 36 laufen jeweils linienförmig aus von oben nach unten. Die oberen Flächen 29 sind abwechselnd von oberen Erhöhungen 30 und oberen Vertiefungen 34 getrennt. Obere Erhöhungen 30 und obere Vertiefungen 34 laufen jeweils linienförmig aus von vorn nach hinten. Obere Erhöhung 30 und vordere Vertiefung 32 verlaufen jeweils entlang einer Linie über Vorderseite und Oberseite des Messers 7 hinweg. Vordere Erhöhung 36 und obere Vertiefung 34 verlaufen jeweils entlang einer Linie über Vorderseite und Oberseite des Messers 7 hinweg. Vordere und obere Erhöhung 30, 36 sowie vordere und obere Vertiefung 32, 34 beginnen jeweils mit einem stumpfen Winkel 40 und erreichen eine obere Spitze 35 bzw. eine vordere Spitze 33 in einem spitzen Winkel 40. Der Übergang zwischen dem Bereich mit stumpfen Winkel 40 zu dem Bereich mit spitzen Winkel 38 erfolgt mit einem geschwungenen Abschnitt bzw. mit einem Radius 22. Zwischen den geschwungenen Abschnitten 22 befindet sich ein gerader Abschnitt 42. Zwischen einer nach vorne vorstehenden Spitze bis hin zu einer nach oben vorstehenden Spitze liegt ein klammerförmiger Abschnitt 44, bestehend aus einem geraden Abschnitt 42 und zwei geschwungenen Abschnitten 22. Zwei benachbarte obere Erhöhungen 30 sind um eine Strecke 46 voneinander beabstandet. Eine Übergangslänge 48, bezogen auf die Ausrichtung der oberen Erhebung 30, ermittelt sich ab Endpunkt des geraden Abschnitts 42 bis die obere Erhebung 30 die maximale Höhe erreicht hat und die obere Spitze 35 bildet. Ein Abstand 50 wird bestimmt, indem die Strecke zwischen vorderer Erhöhung 36 (nach Verlassen des geschwungenen Abschnitts 22 im Bereich der vorderen Spitze 33) und oberer Erhöhung 30 (nach Verlassen des geschwungenen Abschnitts 22 im Bereich der oberen Spitze 35) ermittelt wird.

Der spitze Winkel 38 liegt vorzugsweise in einem Bereich von 10° bis 60°, besonders bevorzugt bei 30°. Der stumpfe Winkel 40 liegt vorzugsweise in einem Bereich von 60 ° bis 150°, besonders bevorzugt bei 130°. Die Strecke 46 liegt vorzugsweise in einem Bereich von 2 bis 6 mm, besonders bevorzugt bei 3,75 mm. Der gerade Abschnitt 42 liegt vorzugsweise in einem Bereich von 0,5 bis 3 mm, besonders bevorzugt bei 1,5 mm. Die Ubergangslänge 48 liegt vorzugsweise in einem Bereich von 0,01 bis 0,1 mm, besonders bevorzugt bei 0,03 mm Der Abstand 50 liegt vorzugsweise in einem Bereich von 0,5 bis 3 mm, besonders bevorzugt bei 1 mm. Der geschwungene Abschnitt 22 liegt vorzugsweise in einem Bereich von 0,01 bis 1 mm, besonders bevorzugt bei 0,5 mm.

Die beschriebene Geometrie zeichnet sich gegenüber einer konventionellen ZickZack-Linie durch eine Reduzierung der Schneidlänge in der Größenordnung von 20% aus. In der Folge wird auch die notwendige Schneidkraft reduziert. Damit ist die Schneidkraft geringer als die Siegelkraft. Die Kontur der Schneidkante 28 zeichnet sich insbesondere durch die geschwungenen Abschnitte 22 aus. Über diese geschwungenen Abschnitte 22 gehen vordere Spitze 33 bzw. obere Spitze 35 jeweils in die geraden Abschnitte 42 über. Vordere Spitze 33 und obere Spitze 35 werden durch den klammerförmigen Abschnitt verbunden.

Eine Reduzierung der Schneidkraft kann gegenüber konventionellen Schneidprofilen bei gleichbleibendem Druck wegen der Verlängerung der Schneidkante 28 erreicht werden. Dies erfolgt insbesondere wegen der Verwendung von geschwungenen Abschnitten 22 bzw. ineinander übergehende Linienbögen. Andererseits wird gezielt die Kerbwirkung der Schneidkante 28 mittels der Geometrie der Spitzen 33, 35 beeinflusst. Die Spitzen 33, 35 dienen nämlich als Aufreißhilfe, indem diese den Packstoff 4 perforieren. Die Aufreißhilfe lässt sich prinzipiell über eine Verringerung des spitzen Winkels 38 verlängern. Damit wird die Kerbwirkung erhöht, ohne hierbei die Schneidkraft signifikant zu erhöhen.

Das Messer 7 wird so im Amboss 5 befestigt, dass die Schneide 8 als höchste Linie der Oberfläche des Amboss 5 in Richtung zur Sonotrode 3 hin überragt.

Die erfindungsgemäße Vorrichtung kann auf herkömmlichen rotativen Schlauchbeutelmaschinen eingesetzt bzw. nachgerüstet werden und ermöglicht das kontaktfreie und verschleißfreie Trennen des Packstoffs mit minimalen Schneidkräften, die geringer als die Siegelkräfte zum Herstellen der Kopf- und Fußnähte sind. Aufgrund der minimalen Rotationsbewegungen der Ultraschall-Siegelwerkzeuge sind sehr kurze Arbeitsakte und ein entsprechend hoher Produktionsdurchsatz erreichbar.

Weiterhin ist ein Verfahren zum Schweißen und Trennen eines Packstoffs offenbart. Hierbei wird ein zuverlässiges Siegeln und kontaktloses und verschleißfreies Trennen des Packstoffs dadurch erreicht, dass in einem ersten Verfahrensschritt der Packstoff zwischen einer Sonotrode und einem Amboss einer Ultraschall-Schweißvorrichtung positioniert und eine Fußnaht einer vorhergehenden Packung gesiegelt wird. Anschließend wird der Packstoff zwischen der vorhergehenden Packung und einer nachfolgenden Packung durchtrennt, wobei jeweils eine Drehung in einer Vorschubrichtung des Packstoffs sowohl von der Sonotrode um eine erste Rotationsachse als auch dem Amboss um eine zweite Rotationsachse ausgeführt wird. Dabei berührt ein aus einer der Sonotrode zugewandten Oberfläche des Ambosses vorstehendes Messer einer Schneidvorrichtung den Packstoff und führt diesen in Richtung zur Sonotrode. Die Sonotrode versetzt den Packstoff in Schwingung, so dass der Packstoff vom Messer durchtrennt wird. Dabei wird in jeder Position der Sonotrode und des Ambosses ein Mindestabstand zwischen dem Messer und der Sonotrode eingehalten, so dass keine Berührung zwischen der Sonotrode und dem Messer erfolgt. In einem abschließenden Verfahrensschritt wird eine Kopfnaht der nachfolgenden Packung gesiegelt.

## Patentansprüche

1. Vorrichtung zum Trennen eines Packstoffs (4) für eine Verpackung, umfassend:
- eine Ultraschall-Schweißvorrichtung (2) mit einer Sonotrode (3) und einem Amboss (5) zum Siegeln des Packstoffs (4), wobei die Sonotrode (3) um eine erste Rotationsachse (X) drehbar ist und der Amboss (5) um eine zweite Rotationsachse (Y) drehbar ist, und
- eine Schneidvorrichtung (6) mit mindestens einem Messer (7) zum Trennen des Packstoffs (4), die im Amboss (5) angeordnet ist, **dadurch gekennzeichnet, dass** das Messer (7) eine Schneide (8) mit einer Schneidkante (28) besitzt, die zumindest zwei Spitzen (33, 35) und zumindest zwei geschwungene Abschnitte (22) umfasst, die die beiden Spitzen (33, 35) miteinander verbinden.

2. Vorrichtung nach Anspruch 1, **dadurch gekennzeichnet, dass** die Schneidkante (28) einen klammerförmige Abschnitt (44) aufweist, der zumindest zwei geschwungene Abschnitte (22) umfasst.

3. Vorrichtung nach einem der vorhergehenden Ansprüche, **dadurch gekennzeichnet, dass** die Schneidkante (28) einen geraden Abschnitt (42) aufweist, der zumindest zwei geschwungene Abschnitte (22) miteinander verbindet.

4. Vorrichtung nach einem der vorhergehenden Ansprüche, **dadurch gekennzeichnet, dass** der gerade Abschnitt (42) gebildet wird, indem zumindest zwei Flächen (29, 31) vorzugsweise unter einem Winkel von ca. 90° aufeinandertreffen.

5. Vorrichtung nach einem der vorhergehenden Ansprüche, **dadurch gekennzeichnet, dass** zumindest zwei Flächen (29; 31) vorzugsweise in derselben Ebene angeordnet sind und über eine Erhöhung (30; 36) oder Vertiefung (34; 32) miteinander verbunden sind.

6. Vorrichtung nach einem der vorhergehenden Ansprüche, **dadurch gekennzeichnet, dass** zumindest zwei Flachen (29; 31) über eine Erhöhung (30; 36) oder Vertiefung (34; 32) und über geschwungene Abschnitte (22) miteinander verbunden sind.

7. Vorrichtung nach einem der vorhergehenden Ansprüche, **dadurch gekennzeichnet, dass** die Spitzen (33, 35) abwechselnd einmal gegenüber der einen Fläche (31) und daran anschließend gegenüber der anderen Flächen (31; 29) übersteht.

8. Vorrichtung nach einem der vorhergehenden Ansprüche, **dadurch gekennzeichnet, dass** die Spitze (33, 35) abwechselnd einmal in Normalenrichtung der einen Fläche (31) und daran anschließend in Normalenrichtung gegenüber der anderen Fläche (31; 29) orientiert ist.

9. Vorrichtung nach einem der vorhergehenden Ansprüche, **dadurch gekennzeichnet, dass** die Spitze (33, 35) mit einem spitzen Winkel (38) in einem Bereich zwischen 10° und 60°, vorzugsweise ca. 30° ausläuft.

10. Vorrichtung nach einem der vorhergehenden Ansprüche, **dadurch gekennzeichnet, dass** das mindestens eine Messer (7) derart am Amboss (5) angeordnet ist, dass ein Mindestabstand (S) zwischen der Sonotrode (3) und einer Schneide (8) des Messers (7) eingehalten wird, sodass der Packstoff (4) ohne eine Berührung zwischen der Sonotrode (3) und dem Messer (7) durchtrennbar ist.

## Claims

1. Device for severing a packaging material (4) for an item of packaging, comprising:
- an ultrasonic welding device (2) having a sonotrode (3) and an anvil (5) for sealing the packaging material (4), the sonotrode (3) being rotatable about a first rotation axis (X) and the anvil (5) being rotatable about a second rotation axis (Y), and
- a cutting device (6) which has at least one knife (7) for severing the packaging material (4) and is arranged in the anvil (5), **characterized in that** the knife (7) has a blade (8) having a cutting edge (28) which comprises at least two tips (33, 35) and at least two curved portions (22) which interconnect the two tips (33, 35).

2. Device according to Claim 1, **characterized in that** the cutting edge (28) has a brace-shaped portion (44) which comprises at least two curved portions (22).

3. Device according to one of the preceding claims, **characterized in that** the cutting edge (28) has a straight portion (42) which interconnects at least two curved portions (22).

4. Device according to one of the preceding claims, **characterized in that** the straight portion (42) is formed **in that** at least two surfaces (29, 31) preferably meet at an angle of approx. 90°.

5. Device according to one of the preceding claims, **characterized in that** at least two surfaces (29; 31) are preferably arranged in the same plane and are interconnected via an elevation (30; 36) or depression (34; 32).

6. Device according to one of the preceding claims, **characterized in that** at least two surfaces (29; 31) are interconnected via an elevation (30; 36) or depression (34; 32) and via curved portions (22).

7. Device according to one of the preceding claims, **characterized in that** the tip (33, 35) alternatingly protrudes beyond one surface (31) and, adjacent thereto, beyond the other surfaces (31; 29).

8. Device according to one of the preceding claims, **characterized in that** the tip (33, 35) is alternatingly oriented in the direction of the normal of the one surface (31) and, adjacent thereto, in the direction of the normal of the other surface (31; 29).

9. Device according to one of the preceding claims, **characterized in that** the tip (33, 35) tapers off at an acute angle (38) in a range of between 10° and 60°, preferably approx. 30°.

10. Device according to one of the preceding claims, **characterized in that** the at least one knife (7) is arranged on the anvil (5) in such a manner that a minimum distance (S) between the sonotrode (3) and a blade (8) of the knife (7) is maintained, so that the packaging material (4) is severable without contact between the sonotrode (3) and the knife (7).

## Revendications

1. Dispositif de séparation d'un matériau d'emballage (4) pour un emballage, comprenant :
- un dispositif de soudage aux ultrasons (2) comprenant une sonotrode (3) et une enclume (5) pour sceller le matériau d'emballage (4), la sonotrode (3) pouvant tourner autour d'un premier axe de rotation (X) et l'enclume (5) pouvant tourner autour d'un deuxième axe de rotation (Y), et
- un dispositif de coupe (6) comprenant au moins un couteau (7) pour séparer le matériau d'emballage (4) qui est disposé dans l'enclume (5), **caractérisé en ce que** le couteau (7) possède un tranchant (8) avec une arête de coupe (28) qui comprend au moins deux pointes (33, 35) et au moins deux portions courbes (22), qui relient l'une à l'autre les deux pointes (33, 35).

2. Dispositif selon la revendication 1, **caractérisé en ce que** l'arête de coupe (28) présente une portion en forme de pince (44) qui comprend au moins deux portions courbes (22).

3. Dispositif selon l'une quelconque des revendications précédentes, **caractérisé en ce que** l'arête de coupe (28) présente une portion droite (42) qui relie l'une à l'autre au moins deux portions courbes (22).

4. Dispositif selon l'une quelconque des revendications précédentes, **caractérisé en ce que** la portion droite (42) est formée par la réunion d'au moins deux surfaces (29, 31) de préférence suivant un angle d'environ 90°.

5. Dispositif selon l'une quelconque des revendications précédentes, **caractérisé en ce qu'**au moins deux surfaces (29 ; 31) sont disposées de préférence dans le même plan et sont reliées l'une à l'autre par le biais d'un rehaussement (30 ; 36) ou d'un renfoncement (34 ; 32).

6. Dispositif selon l'une quelconque des revendications précédentes, **caractérisé en ce qu'**au moins deux surfaces (29 ; 31) sont connectées l'une à l'autre par le biais d'un rehaussement (30 ; 36) ou d'un renfoncement (34 ; 32) et par le biais de portions courbes (22).

7. Dispositif selon l'une quelconque des revendications précédentes, **caractérisé en ce que** la pointe (33, 35) dépasse en alternance une fois par rapport à l'une des surfaces (31) et après celle-ci par rapport à l'autre surface (31 ; 29).

8. Dispositif selon l'une quelconque des revendications précédentes, **caractérisé en ce que** la pointe (33, 35) est orientée en alternance une fois dans la direction perpendiculaire à l'une des surfaces (31) et après celle-ci dans la direction perpendiculaire par rapport à l'autre surface (31 ; 29).

9. Dispositif selon l'une quelconque des revendications précédentes, **caractérisé en ce que** la pointe (33, 35) se termine avec un angle aigu (38) dans une plage comprise entre 10° et 60°, de préférence d'environ 30°.

10. Dispositif selon l'une quelconque des revendications précédentes, **caractérisé en ce que** l'au moins un couteau (7) est disposé sur l'enclume (5) de telle sorte qu'une distance minimale (S) entre la sonotrode (3) et un tranchant (8) du couteau (7) soit conservée, de sorte que le matériau d'emballage (4) puisse être sectionné sans contact entre la sonotrode (3) et le couteau (7).
